Europäisches Patentamt

European Patent Office

Office européen des brevets

(11) Publication number: **0 002 330**

**A1**

## (12) EUROPEAN PATENT APPLICATION

(21) Application number: 78300643.0

(22) Date of filing: 20.11.78

(51) Int. Cl.²: **E 06 B 3/28**
**E 06 B 3/62**

(30) Priority: 29.11.77 NZ 185814

(43) Date of publication of application:
13.06.79 Bulletin 79/12

(84) Designated contracting states:
BE CH DE FR GB LU NL

(71) Applicant: Hindle, John Warwick
Flat 5 4 View Road
Mt. Eden Auckland(NZ)

(72) Inventor: Hindle, John Warwick
Flat 5 4 View Road
Mt. Eden Auckland(NZ)

(74) Representative: Freed, Arthur Woolf et al,
MARKS & CLERK 57-60 Lincoln's Inn Fields
London WC2A 3LS(GB)

(54) Double-glazed window and method for its construction.

(57) The present means therefor comprise a continuous resilient strip (3) incorporating a channel (12) by which it is fitted about the periphery of the additional pane (6) to have a section (11) standing proud of a face (6ª) thereof. The additional pane (6) is marginally undersized relative to the existing pane (7) whereby, together with the seal (3) mounted thereon, pane (6) can be positioned in face to face juxtaposition to pane (7) with strip (3) interposed therebetween. By way of either a non-return valve (17) in pane (6) or an hypodermic type insertion either through seal (3) or between seal (3) and pane (7), the cavity (13) between the panes (6, 7) is partially evacuated. The resultant suction sealling impinges the panes (6) and (7) to seal (3) and thus together to provide a double glazed installation. The same method, means can be used in production of double glazed units.

FIG. 1.

FIG. 2.

## "DOUBLE GLAZING"

This invention relates to double glazing assemblies and a method of providing such double glazing. In particular this invention is concerned with the double glazing of existing in situ single glazed installations.

The intention of this invention is to provide a simple yet effective method of double glazing an existing in situ single glazed installation. The invention is also suitable for utilisation as and in prefabricating double glazed assemblies in readiness for subsequent installation. In a further embodiment the invention provides for an in situ fabricated double glazed assembly.

Many methods and means of double glazing are known all involving, as I understand, some form of brackets or subframe to retain the additional glazing element. Additionally, several of these methods and means describe at least the partial evacuation of the cavity created between the glazing of elements, the desirability of this being known. The most relevant prior art of which I am aware are the following American Patents.

|  |  |
|---|---|
| 579,460 | 2,117,581 |
| 1,336,211 | 2,177,001 |
| 1,495,948 | 2,436,037 |
| 1,915,098 | 2,925,862 |

Not one of these known methods or means teaches either reliance on the suction so created to provide the sole supporting and retaining means for the additional glazing element or utilisation of such phenomenon as a method of assembly or construction such characteristics being the essence of this invention. By this, this invention eliminates the need and thus cost of additional support brackets or sub-frames, and, as hereinafter described, this enables the simple and ready assembly of the additional glazing element particularly to an existing in situ installation.

According to a first aspect of this invention there is provided a double glazed window assembly characterised in that a continuous impervious resilient sealing strip is interposed between peripheral face sections of adjacent faces of substantially parallel disposal primary and secondary glazing elements as to form a cavity therebetween, the cavity being at least partially evacuated to provide, owing to the reduced pressure within the cavity, that each glazing element is impinged inwardly in sealing contact onto the sealing strip to thus seal the glazing elements and the sealing strip together.

According to a second aspect of this invention there is provided a method of double glazing comprising the steps of mounting a continous impervious resilient sealing strip about a peripheral face section of a secondary glazing element to stand proud of that face, positioning the aforesaid sub-assembly in face to face juxtaposition with a primary glazing element such that at least part of the sealing strip is interposed between the adjacent faces of the glazing elements to thereby form a cavity between the glazing elements, providing a closeable aperture to conjoin
the cavity to atmosphere, at least partially evacuating
the cavity through the aperture so that the lower air
pressure so created therein causes the glazing elements
to impinge inwardly in sealing contact onto the sealing
strip and thus into a unitary assembly and then closing
the aperture.

In this specification the words "primary" and "secondary"
are used to differentiate between the two glazing elements
of a double glazed assembly.  They are chosen as they are
particularly suitable in describing utilisation of the
invention towards its primary object, the double glazing
of an existing in situ single glazed installation.  As
described hereinafter the invention is also suitable for
use in prefabricating a double glazed window and the
in situ fabrication of new double glazed assemblies.  The
use of such words relative to those forms of the invention
should not be construed as limited factors but merely as
a means of distinguishing one glazing element from the
other.

Fig.1 is a sectional view of an edge of a double
glazed assembly depicting one means enabling the
partial evacuation of the intermediate cavity, and

Figs.2 & 3 are similar views to Fig.1 depicting two
alternative means of achieving partial evacuation
and

Fig.4 is a cross-sectional view of a preferred sealing strip, and

Fig.5 is a similar view to Fig.1 depicting an in situ prefabricated modification of the invention.

A continuous resilient sealing strip 3 is formed from an impervious resilient material such as a suitable plastics or rubberised material, for example, Neoprene (trademark). Sealing strip 3 is formed into a continuous length shaped commensurate to the peripheral shape of glazing elements 6,7 in conjunction with which the sealing strip 3 is to be utilised, conventionally most often square or rectangular shaped. Sealing strip 3 is preferably formed from lengths thereof severed from a parent roll, the lengths corresponding to the lengths of the sides of the secondary glazing element 6, The lengths of sealing strip have their ends fused together, such as with a mitre joint configuration, to correspond with the corners of the glazing element 6.

Alternatively, a single length of sealing strip 3, corresponding in length to the total peripheral length of glazing element 6, can have its ends fused together to form the required continuous sealing strip element. If such method is utilised preferably the corners of the secondary glazing element 6 are relieved, for example rounded, to facilitate fitting of the seal thereto as described hereinafter.

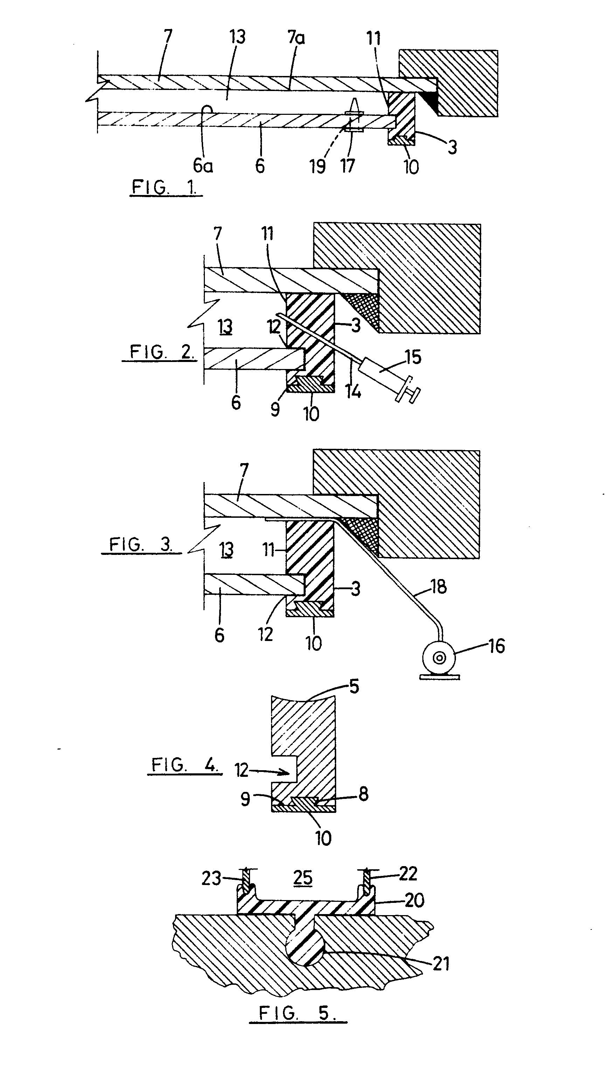

Referring in particular to Fig.4 preferably one face 5 of the sealing strip 3 is concavely dished in the transverse plane to facilitate sealing between the sealing strip 3 and a primary glazing element 7. The opposite face 8 of sealing strip 3 preferably incorporates a longitudinally extending dove-tail shaped groove 9 in which a decorative strip 10 of any suitable configuration, colour or material can be affixed, such as by snap-fastening within the groove 9, for aesthetic purposes. Such is particularly desirable as some impervious materials suitable for utilization as a sealing strip 3, including the preferred "Neoprene" (trademark) are only available, to the best of my knowledge, in black or alternatively it is preferable that the "black" forms of suitable materials be utilised as these generally are more resistant to perishing.

In a lateral face 11 of the sealing strip preferably a longitudinally extending glazing element edge receiving channel 12 is formed, the channel 12 being spaced away from the concavely shaped face 5 of the sealing strip 3. In forming the sealing strip into a continuous configuration as described above the channel 12 thereof is disposed inwardly.

In utilising the invention a continuous sealing strip 3 is fitted about and to the edge of a commensurately shaped secondary glazing element 7, the edge of which is fitted to the channel 12 such that the main body of the sealing strip 3 stands proud of a face $6^a$ of the secondary glazing element 6. The concavely formed face 5 is thus spaced away from the secondary glazing element 6.

The aforesaid sub-assembly is then placed in face to face juxtaposition with the primary glazing elements 7, the sealing strip 3 being disposed therebetween with the concavely formed face 5 thereof butted up, in face to face relationship, against a peripherl section of the adjacent face $7^{\underline{a}}$ of the primary glazing element 7. A cavity 13 is thus formed between the glazing elements 6,7 and which is surrounded and thus peripherally defined by the sealing strip 3.

Cavity 13 is then at least partially evacuated and it is the resultant pressure differential between the pressure within the cavity 13 and the external essentially atmospheric pressure that maintains the glazing elements 6,7 and the sealing strip 3 as a unitary assembly. More particularly, the resultant lower pressure in the cavity 13 causes each glazing element to impinge in sealing contact inwardly toward one another and thus onto the sealing strip to thus hold the glazing elements 6,7 and the sealing strip 3 together.

The means and the operational step by which the cavity 13 is at least partially evacuated is not critical. Further, it is found that only a small reduction in the pressure of the cavity is necessary to achieve the desired sealing and thus likewise sophisticated evacuation apparatus is not necessary. While total or substantially total evacuation of the cavity will be functionally adequate such action can lead to problems, for example, spacers may be necessary between the glazing elements to resist collapsing, other than inconsequential collapsing, therebetween.

Referring in particular to Figs. 103, three methods by which partial evacuation of the cavity are now described.

As depicted in Fig.2 in a preferred method a hollow probe in the form of a fine needle 14, for example a needle of a hypodermic needle device 15, is inserted through the wall of the sealing strip 3. The hypodermic device 15 is operated to partially evacuate cavity 13 whereupon the needle 14 is removed and it is found that the material of the sealing strip 3 is sufficiently resilient to take-up the puncture formed therein by the needle and close such aperture as the needle 14 is removed.

Referring to Fig.3 in a further method a needle 14 as aforesaid or a length of tube 18 of similar transverse dimension is inserted between the sealing strip 3 and the primary glazing element 7. The tube 18 can be substantially rigid or pliable, but of sufficient diametric strength to resist the compressing forces thereon caused by the partial evacuation and can be so inserted during or subsequent to the juxtaposition of the glazing elements 6,7. The partial evacuation of cavity 13 and the closing of the aperture so created can be achieved in similar manner to that described above or alternatively by coupling the hose 18 to an evacuation pump 16. At the point of entry of hose 18 the sealing strip takes-up against the face of the primary glazing element 7 upon withdrawal of the tube 18 from therebetween.

In a third method as depicted in Fig.1 a valve 17 of any suitable convention and known construction can be included as an integral part of either the glazing elements 6,7 or the sealing strip 3. Preferably the valve 17 is mounted in an aperture 19 formed through the secondary glazing element 6 but, however mounted, the valve 17 remains as an integral component of the assembly. Valve 17 forms a closeable aperture through which the partial evacuation of the cavity 13 takes place by utilising suitable evacuation means,for example, an evacuation pump, as described above, coupled to the valve 17.

The invention is also suitable for utilisation in and as prefabricated double glazed assemblies. Such can be constructed substantially in accordance with the above, that is, fabricating a single glazed window assembly including a frame and then adding a secondary glazing element thereto. Alternatively, two glazing elements, without any framing, can be joined into a double glazed assembly as described above and then fitted to a frame, in such case, the primary glazing element being marginally oversized relative to the secondary glazing element to provide for its subsequent mounting to a frame.

Additionally, referring in particular to Fig.5 a sealing strip 20 fabricated into a continuous form and otherwise similar to sealing strip 3, can incorporate an outer anchoring rib 21 and two, spaced apart, inwardly positioned glazing element edge receiving channels 22,23. By way of anchor rib 21 the sealing strip 20 can be permanently fixed in situ, such as during the construction of a building, and thereafter glazing elements mounted in each channel 22,23 by flexing outwardly the outer wall of each channel 22,23 to thus snap fasten glazing elements thereinto. Spacers can be incorporated between the glazing elements to resist their collapsing together. One or other of the glazing elements can incorporate a valve, such as valve 17, to achieve the partial evacuation of the cavity 25 therebetween or alternatively the partial evacuation may be achieved by utilising an hypodermic needle device as described above.

Experiments and testing to date have shown that it is not necessary to utilise an adhesive between either of the glazing elements 6,7 and the sealing strip 3 to provide adequate sealing and strength. However, it is envisaged that an adhesive could be so utilised either or both as an adjunct fastening means or as a means of pre-positioning the sealing strip 3 in readiness for the partial evacuation of the cavity 13. With respect to the former aspect such could provide a safety factor should a double glazed assembly be fractured thus destroying the vacuum seal characteristic thereof. It is envisaged that the adhesive would limit the spread of any broken free glazing pieces.

Under the second aspect by utilising, for example, a contact

0002330

adhesive sealing strip could be at least temporarily positioned to either a secondary or a primary glazing element and the remaining glazing element similarly positioned in such temporary manner. Such would eliminate the need for the glazing element edge retaining channel 12 as, for example, the two opposite edges 5,8 could be so temporarily fixed against the respective glazing elements.

CLAIMS:-

1. A double glazed window assembly characterised in that a continuous impervious resilient sealing strip (3) is interposed between peripheral face sections of adjacent faces($6^{\underline{a}}$, $7^{\underline{a}}$) of substantially parallel disposed primary (7) and secondary (6) glazing elements as to form a cavity (13) therebetween, the cavity (13) being at least partially evacuated to provide, owing to the reduced pressure within the cavity (13), that each glazing element (6, 7) is impinged inwardly in sealing contact onto the sealing strip (3) to thus seal the glazing elements (6,7) and the sealing strip (3) together into a unitary assembly.

2. A double glazed window assembly as claimed in claim 1 wherein the secondary glazing element (6) is marginally undersized relative to the primary glazing element (7) and the sealing strip (3) incorporates a channel (12) in an inner lateral face thereof and in which the edge of the secondary glazing element (6) is mounted.

3. A double glazed window assembly as claimed in claim 2 wherein the primary glazing element (7) comprises an existing in situ glazing element to which the secondary glazing element is subsequently mounted.

4.. A method of double glazing comprising the steps of mounting a continuous impervious resilient sealing strip (3) about a peripheral section of a face ($6^{\underline{a}}$) of a secondary glazing element (6) to stand proud of that face ($6^{\underline{a}}$),

positioning the aforesaid sub-assembly in substantially parallel juxtaposition with a primary glazing element(7) such that part(11) of the sealing strip(3) is interposed between the adjacent faces $(6^{\underline{a}}, 7^{\underline{a}})$ of the glazing elements (6,7) to thereby form a cavity(13) between the glazing elements (6,7), providing a closeable aperture (19,14,18) to conjoin the cavity (13) to atmosphere, at least partially evacuating the cavity (13) through the aperture (19,14,18) so that the lower air pressure so created therein causes the glazing elements (6,7) to impinge inwardly in sealing contact onto the sealing strip (3) and thus into a unitary assembly and then closing the aperture (19,14,18).

5.   A method of double glazing as claimed in Claim 4 wherein the cavity (13) is evacuated through a hollow probe (14,18) inserted either through the sealing strip (3) or between the sealing strip(3) and the primary glazing element(7), the probe (14,18) being removed following the partial evacuation of the cavity(13), the probe (14,18) thereby forming the closeable aperture.

6.   A method of double glazing as claimed in Claim 4 wherein a valve (17) is incorporated through either the sealing strip(3) or one of the glazing elements (6,7,) to provide the closeable aperture through which the cavity (13) is partially evacuated, the valve(17) remaining as an interger of the assembly.

7.  A method of double glazing as claimed in Claim 4 wherein the primary glazing element (7) is an existing in situ glazing element and wherein the sealing strip(3) incorporates a secondary glazing element(6) receiving channel(12) extending longitudinally of a lateral face thereof and by which the sealing strip(3)is firstly mounted to the secondary glazing element(6) prior to the juxtapositioning of the glazing elements(6,7).

8.  A method of double glazing as claimed in Claim 7 wherein the glazing element contacting face(12,5) of the sealing strip(3) are firstly adhesive coated to facilitate either or both the initial mounting of the sealing strip (3) to one or both glazing elements (6,7) and/or to provide additional means of permanently affixing each glazing element (6,7) to the sealing strip(3).

0002330

FIG. 1.

FIG. 2.

FIG. 3.

FIG. 4.

FIG. 5.

# EUROPEAN SEARCH REPORT

**European Patent Office**

| | Application number |
|---|---|
| | EP 78 300 643.0 |

| DOCUMENTS CONSIDERED TO BE RELEVANT | | | CLASSIFICATION OF THE APPLICATION (Int. Cl.²) |
|---|---|---|---|
| Category | Citation of document with indication, where appropriate, of relevant passages | Relevant to claim | |
| X | <u>GB - A - 950 839</u> (ST.J. PAYNE)<br>* whole document * | 1-4<br>6,7 | E 06 B  3/28<br>E 06 B  3/62 |
| | -- | | |
| X | <u>DE - A - 2 516 576</u> (G. PADE)<br>* whole document * | 1,3,<br>4,6 | |
| | -- | | |
| X | <u>DE - A - 2 512 168</u> (PPG)<br>* whole document * | 1-5,<br>7,8 | **TECHNICAL FIELDS SEARCHED (Int.Cl.²)** |
| | -- | | |
| X | <u>DE - U - 7 530 303</u> (H. HAPKE et al)<br>* whole document * | 1-4,<br>7 | E 06 B  3/00 |
| | -- | | |
| D | <u>US - A - 2 925 862</u> (K. SUNDBY)<br>* whole document * | | |
| | -- | | |
| D | <u>US - A - 2 436 037</u> (W.A. DONEY)<br>* whole document * | | |
| | -- | | **CATEGORY OF CITED DOCUMENTS** |
| D | <u>US - A - 2 177 001</u> (W. OWEN)<br>* whole document * | | X: particularly relevant<br>A: technological background<br>O: non-written disclosure<br>P: intermediate document<br>T: theory or principle underlying the invention |
| | -- | | E: conflicting application<br>D: document cited in the application<br>L: citation for other reasons |
| D | <u>US - A - 2 117 581</u> (S.A. STONEBACK)<br>* whole document * | | |
| | --          ./.. | | &: member of the same patent family, corresponding document |

X The present search report has been drawn up for all claims

| Place of search | Date of completion of the search | Examiner |
|---|---|---|
| Berlin | 13-02-1979 | WUNDERLICH |

EPO Form 1503.1   06.78

| | EUROPEAN SEARCH REPORT | Application number |
|---|---|---|
| European Patent Office | | EP 78 300 643.0 <br> - page 2 - |

| DOCUMENTS CONSIDERED TO BE RELEVANT | | | CLASSIFICATION OF THE APPLICATION (Int. Cl.²) |
|---|---|---|---|
| Category | Citation of document with indication, where appropriate, of relevant passages | Relevant to claim | |
| D | <u>US - A - 1 915 098</u> (A.W. KILE) <br> * whole document * <br> -- | | |
| D | <u>US - A - 1 495 948</u> (R.J. CARNEY) <br> * whole document * <br> -- | | |
| D | <u>US - A - 1 336 211</u> (H. DUFFY) <br> * whole document * <br> ---- | | TECHNICAL FIELDS SEARCHED (Int. Cl.²) |